# EUROPEAN PATENT SPECIFICATION

(11) **EP 2 921 254 B1**
(45) Date of publication and mention of the grant of the patent: **01.08.2018**
(21) Application number: 13894062.2
(22) Date of filing: 11.12.2013
(51) Int. Cl.: G01B 5/00

(54) **INDEXING HEAD WITH TWO ROTATION AXES**
INDEXIERKOPF MIT ZWEI SCHWENKACHSEN
TÊTE INDEXÉE À DEUX AXES DE ROTATION

(43) Date of publication of application: 23.09.2015
(73) Proprietor: Unimetrik, S.A., 01170 Legutiano (Álava) (ES)
(72) Inventor: DE LA MAZA URIARTE, Borja, ES48930 Las Arenas (Bizkaia) (ES)
(74) Representative: Rebate Conde, Maria Fernanda
(86) International application number: PCT/ES2013/070869
(87) International publication number: WO 2015/086864

(56) References cited:
- GB-A- 2 298 488
- US-A- 2 547 616
- US-A- 5 084 981
- US-A- 5 088 337
- US-A1- 2004 154 177
- US-A1- 2006 112 578
- US-A1- 2010 325 863

## Description

The object of the invention is an indexing head with two rotating axes which makes it possible to move objects connected to it, such as an optical scanner, for example, and whose distinctive feature lies in the fact that it has two independent mechanisms to control locking of the two rotating axes.

### State of the art

Indexing heads are heads with an ability to repeat the position determined by the user as many times as required. Heads used nowadays are directed electronically.
The document US5088337A describes a head which can be used to position a probe mounted on a coordinate positioning machine. This head is mounted on the machine using a fixed support. The head has a rotor which rotates around a vertical axis, according to the plane of the drawing, and a rotating element, which houses the probe and performs a second rotation around an axis orthogonal to the first. The different positions are fixed by means of an array of ball bearings and cooperating rollers, arranged circumferentially around the two rotating axes. The locking and unlocking of a given position is carried out by a manual mechanism common to both axes. This mechanism consists of a right angle bracket which pivots on a support because of the retraction of a bar, located in the vertical rotating axis, which pushes the rotating element to couple with the side wall of the rotor. The bar is moved manually using a wheel which rotates a lever, the rotation of which displaces a bar, joined transversally to the bar. This movement is the one which causes the coupling and uncoupling of the rotor with regard to the fixed portion or support, thus also locking and unlocking the first rotation.

Meanwhile, the document GB2298488A operates according to principles similar to the above, with the difference that the movement of the right angle bracket is produced by a locking motor. This motor rotates an axis between two predetermined angular positions, which correspond to locking and unlocking of the head. A cable passes around a pulley, mounted on the base, and is connected by its end furthest from the axis to the right angle bracket-shaped drive device, similar to the one described earlier. When the motor operates, it rotates the axis, pulling the locking lever (part of the right angle bracket) upwards and withdrawing the rotor from its indexed position, pushing another rotor upwards to couple with the base. On the other hand, reverse rotation of the axis would have the opposite effect on the rotors indicated.

US 2006/0112578 A1 discloses a motorized orientable measuring head intended for a machine for measuring machine three-dimensional coordinates, in which the orientable axes are actuated by motors rigidly supported on bearings or ball bearings. The head is designed to be used in a manual or automatic manner for measuring coordinates.

US 5,084,981 discloses a probe head designed for orientating a probe relative to a head of a coordinate measuring machine. The probe head is manually adjustable and comprises a support, a rotor rotatable relative to the support, and a swivel rotatable relative to the rotor.

US 2004/0154177 A1 discloses an adjustable probe consisting of a fixed part designed to be held to a measuring machine or a machine tool, and a mobile feeler that can be oriented about two independent axes through a multiplicity of spatial directions. Each of the two axes may comprise an actuator to unlock and adjust the axes.

### Description of the invention

The object of the invention, as indicated in the description thereof, refers to an indexing head with two principal rotating axes referred to as A and B for the sake of simplicity. The rotating axis A corresponds to the rotating axis perpendicular to the fixing position with regard to the operating mode of the head in the measuring machine, whereas rotating axis B corresponds to the axis of the head fixing position.

The head indexing relates to the ability to repeat the position. The repetition of the position is achieved as a result of the following process:
a) Unlocking of the initial position on axes A and B.
b) Rotation of axes A and B to a position determined by the user.
c) Locking of rotating axes A and B in the new position.

When the system is locked, it means that the rotating axis has no degree of freedom for movement, which is achieved by using an array of cylindrical rollers and ball bearings. On both the rotating axis A and B, the ball bearings are placed in a circumference, in an ordered fashion, with a 5° separation between them. Meanwhile, there are three pairs of rollers, separated from each other by an angle of 120°, in a part which moves in relation to the fixed parts which house the ball bearings. In a second practical embodiment, the aforementioned part will be formed of two sloping ramps, which replace the rollers.

Considering that the rotating axes are mobile, and once the motors responsible for rotating the head on both A and B axes reach the position determined by the user, the upper locking mechanism (locking on the B axis) and lower locking mechanism (locking on the A axis) are activated to fix the established position. This means that the motors are only working during the process of securing and releasing, guaranteeing the position mechanically, and also providing a saving in energy, consumption and useful life of the motors, as they only work when in movement and not when the desired position is reached.

Meanwhile, on axis A (perpendicular to the fixing position) a rotation range of ±105° is guaranteed. This means that rotation on the A axis is sufficient to reach these positions without activating the locking/unlocking of the B axis and, consequently, reducing wear and tear on the mechanical components of the B axis and improving its durability. Meanwhile, the locking/unlocking system on the B axis returns to its initial position thanks to the force exercised by two springs in the axial direction of the rotating axis B. The force applied by these springs can be regulated using a mechanism designed for the purpose, as the force to be applied may vary depending on the component which has to be moved.

Throughout the description and the claims, the word "comprises" and variants thereof are not intended to exclude other technical characteristics, additions, components or steps. For experts in the subject, other objects, advantages and characteristics of the invention will be gleaned in part from the description and in part from the practice of the invention. The following examples and drawings are provided for illustrative purposes, and are not intended as a restriction on this invention. In addition, this invention covers all the possible combinations of particular and preferred embodiments indicated here.

### Brief description of the figures

Below is a very brief description of a series of drawings which help to understand the invention better and which are expressly related to an embodiment of said invention presented as a non-restrictive example thereof.
- FIG 1 -: Shows an image of the head which is the subject of the invention, showing the two rotating axes A and B.
- FIG 2 -: Shows the cross section of the locking mechanism on axis B in the unlocked position.
- FIG 3 -: Shows a first view in detail of the locking mechanism on axis B in the unlocked position.
- FIG 4 -: Shows the cross section of the locking mechanism on axis B in the locked position.
- FIG 5 -: Shows a first view in detail of the locking mechanism on axis B in the locked position.
- FIG 6 -: Shows a detail of the rest areas and gear stop.
- FIG 7 -: Shows a detail of the system which guarantees return to the initial position.
- FIG 8 -: Shows a detail of the rotating operation of the rotating axis B.

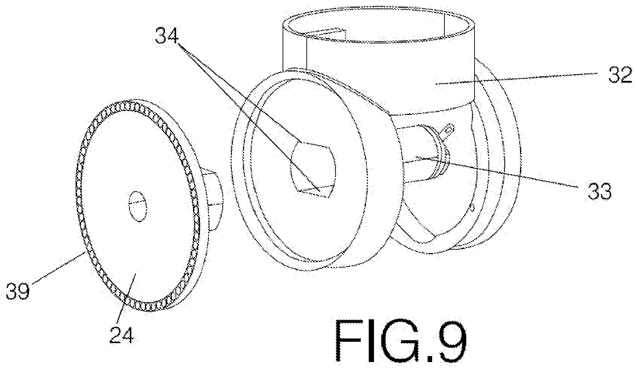

- FIG 9 -: Shows a detail of the guiding areas in the lower casing structure.
- FIG 10 -: Shows the cross section of the locking mechanism on axis A in the unlocked position.
- FIG 11 -: Shows the cross section of the locking mechanism on axis A in the locked position.

### Description of a detailed method of embodiment of the invention

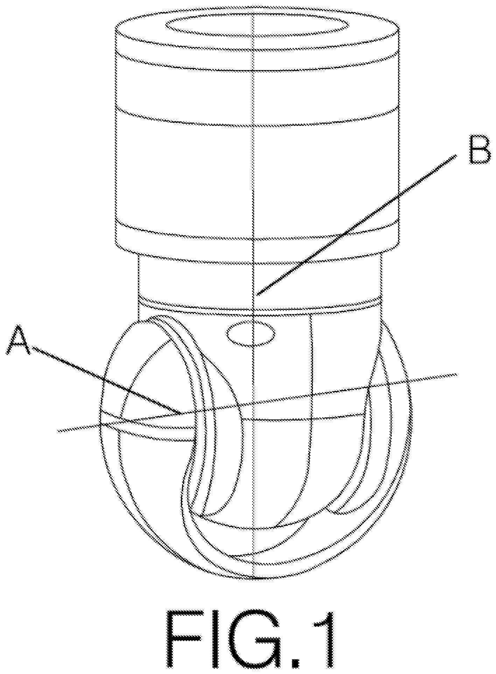

As can be seen in figure 1, the head has two principal rotating axes called A and B. The rotating axis A corresponds to the rotating axis perpendicular to the fixing position with regard to the operating mode of the head in the measuring machine, whereas rotating axis B corresponds to the axis of the head fixing position. The name indexing head refers to the ability of the head to repeat the position determined by the user. The repetition of the position is achieved as a result of the following process:
a) Unlocking of the initial position on rotating axes A and B.
b) Rotation of the axes to a determined position.
c) Locking of the A and B rotating axes in the new position.

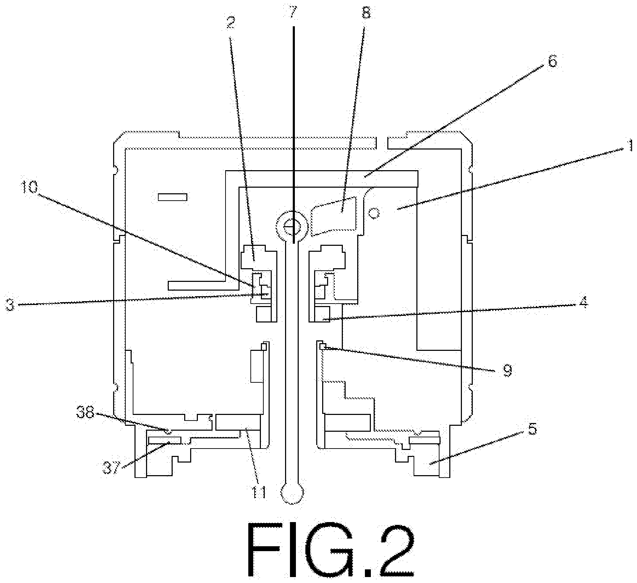

With reference to figure 2, it is possible to see the locking mechanism on the B axis (the one which corresponds to the fixing direction) in the unlocked position. The upper base (1) is considered the reference part, as it is a part which does not move in any way. In the unlocked position, the part which holds the lower casing (5) which houses the gears for the rotating axis B (11) is in its natural position, supported solely by a supporting axis (7) and resting on the ring (9) which the part supporting the lower casing (5) has on its upper part.

Located in the lower casing (5) is an array of ball bearings (38) which are arranged in a circumference, in an ordered manner and with a separation of 5° between them on both rotating axes A and B. Meanwhile, there are three pairs of cylindrical rollers (37), separated from each other by an angle of 120°, in a part which moves in relation to the fixed parts which house the ball bearings.

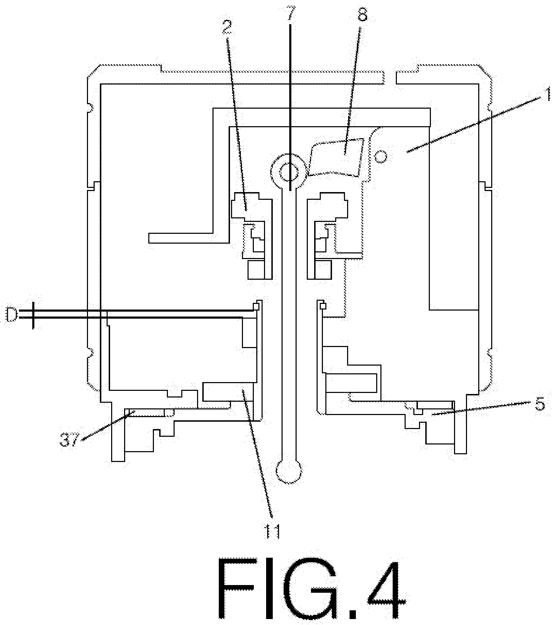

Figure 4 shows the locking position. This figure shows how the rotation of the part called the anchor gear (2), because of a lever which it incorporates, causes the group formed by the supporting axis (7), the part which supports the lower casing (5), an L-shaped part (8) and the gear on the rotating axis B (11) to move upwards, moving a referenced distance such as (D), reaching a locking position where the ball bearings in the lower casing (5) and the rollers come into contact, preventing any degree of freedom.

The operation of the locking system on the rotating axis B is relatively simple. Rotation of the anchor gear (2) causes the L-shaped part (8) to slide along the lever of the aforementioned anchor gear (2). The sliding occurs on two ball bearings (30) which the L-shaped part (8) incorporates to reduce friction, rest on a single point and facilitate rotation. The lever forces the L-shaped part (8) to rotate on its transverse axis, raising the supporting axis (7) and, consequently, the entire lower part of the head which is the object of the invention.

The lever incorporated in the anchor gear and controlled rotation thereof cause the lower part of the head to move vertically until it blocks any permitted movement.

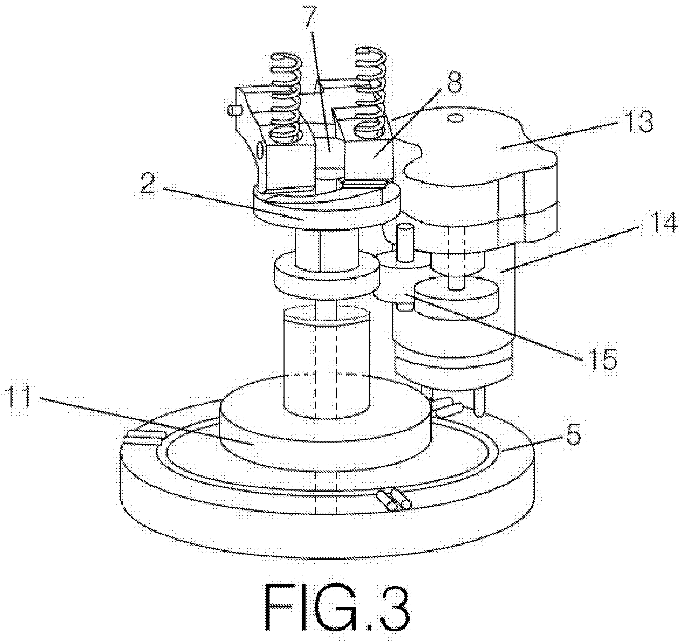

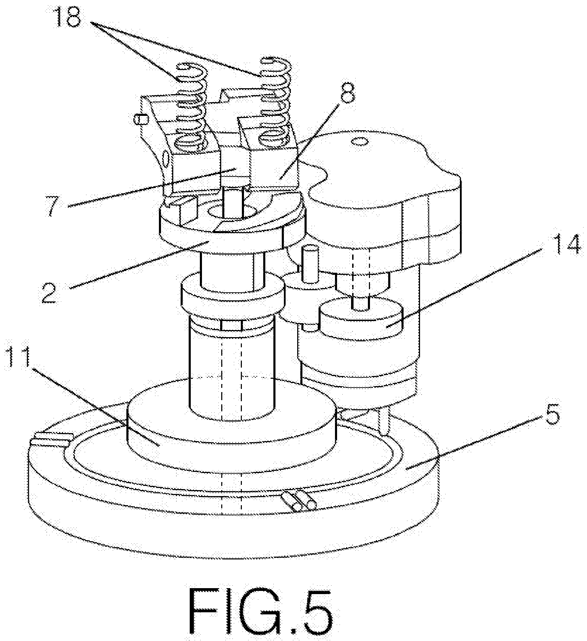

Observe the difference between the initial and final positions of the critical components which make up the mechanism shown in figures 2 to 4. In figures 2 and 3, the anchoring mechanism is in its initial position, i.e. in an unanchored or unlocked position, whereas in figures 4 and 5 the anchor gear (2) has rotated, raising the L-shaped part (8) together with the supporting axis (7), the part which supports the lower casing (5), the gears on the rotating axis B (11) and consequently the lower part of the head with all its associated parts.

Rotation of the anchor gear (2) is controlled by a secondary servomotor on axis B (14), which is activated when it receives a signal from the controller. This secondary servomotor on axis B (14) is associated with a reduction gear (13) which reduces the output speed of the servomotor and at the same time increases the torque. This reduction gear is connected to a transmission system (15) which is what causes the anchor gear (2) to rotate and consequently lock or unlock the whole, preventing or allowing rotation of axis B.

For rotation of the anchor gear (2) to be more effective, the part is guided by ball bearings (3) which in turn are inserted in a part called the positioning disc (10).

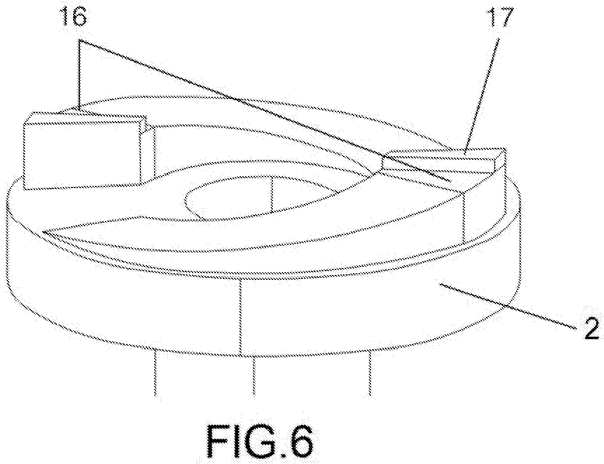

To allow the mechanism to stay in the anchor position, the lever on the anchor gear (2) has two flat areas (16), perpendicular to the direction in which the force is applied, and where there is no danger of the system returning to its initial position. In addition, to prevent the system returning to the initial position in the same rotation direction, the anchor gear has stops (17) at the end of the lever. All of this can be seen to better effect in figure 6.

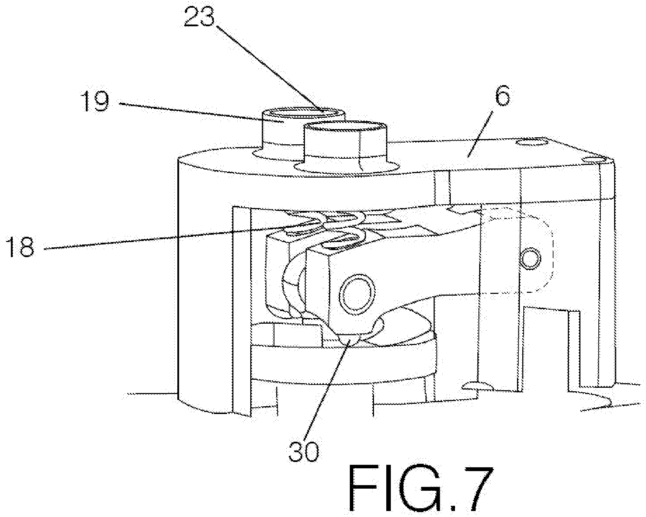

To enable the system to return to its initial position, two springs (18) are incorporated, with a pre-load capacity to apply greater or lesser force to the L-shaped part (8) in the releasing process and in the axial direction of rotating axis B. These springs are preloaded by means of two set screws (23) which screw into openings (19) which can be seen in figure 7. Depending on how tightly they are screwed in, the springs (18) will be preloaded to a greater or lesser extent.

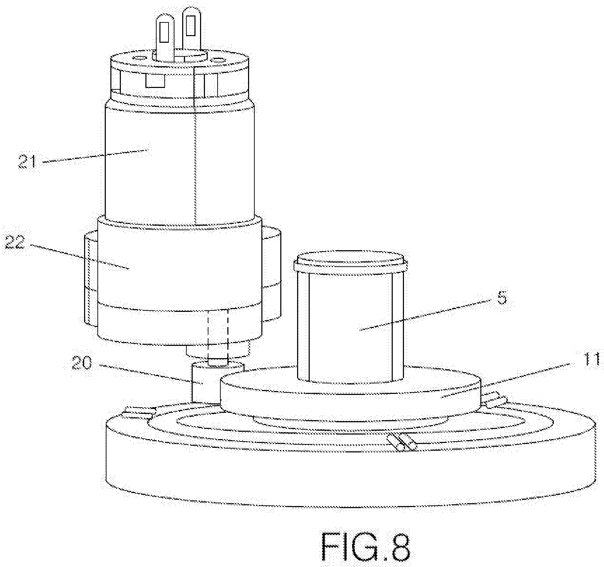

As can be seen in figure 8, once the anchor system of rotating axis B has released the lower part, the principal servomotor B (21) receives a signal to rotate the head to the position desired by the user for axis B. This principal servomotor B (21), as with the secondary servomotor B (14), is associated with a reduction gear (22) which reduces the output speed of the principal servomotor B (21) while at the same time increasing the output torque. A pinion (20) which this reduction gear (22) has at the output of its own rotating axis is meshed with the rotating axis B (11) gear of the part supporting the lower casing (5). Consequently, the whole of the lower part rotates to the desired position.

Having explained both the anchoring/releasing mechanism and the operation of rotating axis B, an explanation will now be given of the anchoring/releasing mechanism and the operation of rotating axis A.

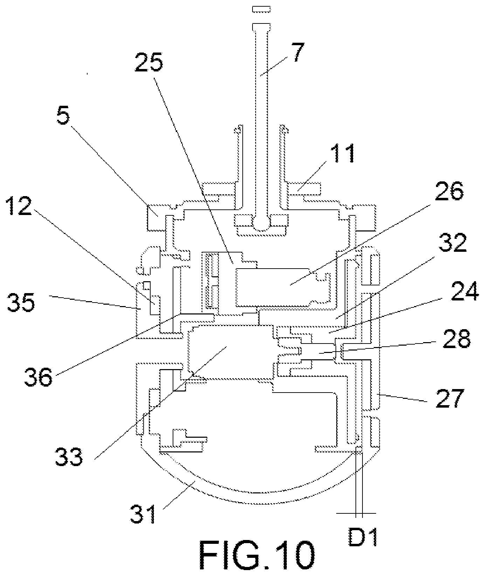

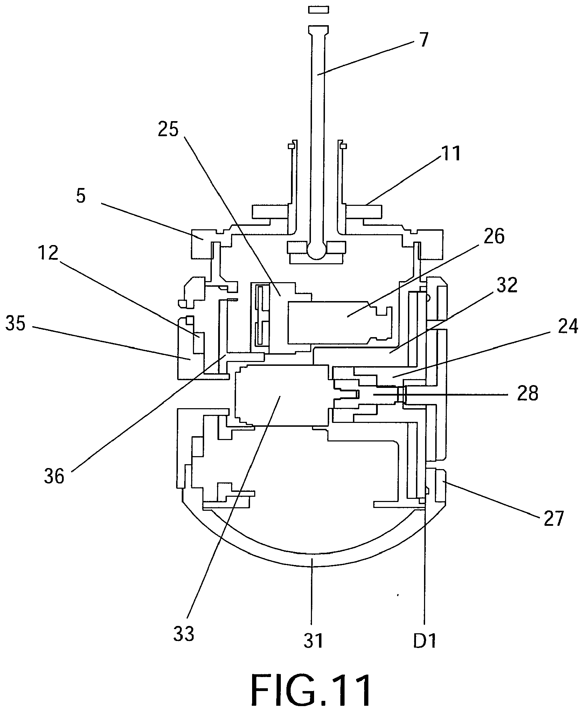

Figure 10 presents a cross section of the lower part of the head in the unlocked position. Meanwhile, figure 11 presents a cross section of the lower part of the head in the locked or anchored position. As can be seen, the only variation consists of the longitudinal movement (D1) experienced by the anchoring of the external casing (24) on the rotating axis A (crosswise to the locking direction).

To lock the rotation of the external casing (31), as presented previously in reference to the locking system, the anchoring part (24) of the external casing (31) has an array of ball bearings (39) which allow the external casing to be positioned, and three pairs of rollers with a separation of 120° between them, in a position determined every 5°.

Having explained the locking system for rotating axis A, an explanation will now be given of the positioning and rotating system for axis A.

The rotating operation and the positioning of the external casing (31) are identical to the system used on rotating axis B. On the one hand, rotation is carried out by a principal servomotor A (26) attached to a reduction gear (25) which, by means of a transmission system using gears, formed of the pinion (29) and the gears (12), rotates the external casing (31).

As far as the locking/unlocking mechanism for rotation of axis A is concerned, the mechanism is completely independent of the locking/unlocking mechanism for rotation of axis B.

Its principal characteristic is its simplicity. The secondary servomotor A (33) incorporates a part called a threaded shaft A (28) at the shaft output. This part is inserted in the threaded hole in the anchoring part (24) of the external casing (31).

Once the secondary servomotor a (33) begins to operate, the rotation direction will determine whether the anchoring part (24) of the external casing (31) moves forward or backwards, locking or unlocking the rotation of the external casing (31). So that the anchoring part (24) of the external casing (31) can only move forwards or backwards and not rotate, until the distance referred to as (D1) has disappeared, the structure of the internal casing (32) has two guide areas (34) in which the anchoring part (24) of the external casing (31) can slide with no possibility of rotation.

One of the differences in the locking/unlocking mechanism for rotating axis B is that, while the positioning ball bearings on the rotating axis B (39) are fixed to the upper base (1), which is a static part, the positioning ball bearings on the rotating axis A have relative movement, as these positioning ball bearings on the rotating axis B (39) are fixed to the anchoring part (24) of the external casing (31) with the ability to move forwards or backwards. By ensuring that the anchoring part (24) of the external casing (31) cannot rotate, the ball bearings can repeat their position even though they have relative movement.

To avoid all the weight which has to be supported by the head falling on the cover, the gears (35) in the internal casing (32) and the anchoring axis (27) of the internal cover have been designed so that the effort is distributed along the circumference forming the part resting on the structure of the internal casing (32).

## Claims

1. Indexing head with two rotating axes, with a first rotating axis A perpendicular to the fixing position with regard to the mode of operation of the head in the measuring machine, and with a second rotating axis B in the axis of the fixing direction, in turn defining an upper part of the fixed head with regard to the B axis and a lower part of the head, which moves in relation to axis A and B; and which comprises
a principal servomotor A (26) for rotation on the A axis and an anchoring mechanism for the position on the A axis arranged in said lower part of the head; and a principal servomotor B (21) for rotation on the B axis with an anchoring mechanism for the position on the B axis arranged on said upper part of the head;
**characterised in that**
the locking mechanism on the B axis comprises an anchor gear (2) connected to a transmission system (15) of a secondary motor B (14) which rotates an L-shaped part (8) caused by the anchor gear (2) sliding on a lever in such a way that it raises the lower part of the head; and
where the locking mechanism on the A axis comprises an anchoring part (24) of an external casing (31) which has an array of ball bearings which allow said external casing (31) to be positioned, and wherein a secondary servomotor A (33) provided with a threaded shaft (28) inserted in a threaded hole of the anchoring part (24) causes in turn the forwards or backwards movement of said anchoring part (24) to lock the rotation of said external casing (31) depending on the rotational direction of the secondary servomotor A (33).

2. Head according to claim 1 where the anchoring mechanism for axis B comprises an upper base (1), in such a way that, in the unlocking position, the part which supports the lower casing (5) which houses a gear for rotating axis B (11), supported solely by a supporting axis (7) and resting on the ring (9) which the part supporting the lower casing (5) has on its upper part.

3. Head according to any of the claims 1 -2 in which the lever on the anchor gear (2) has two flat areas (16), perpendicular to the direction in which the force is applied, and stops (17) at the end of the lever.

4. Head according to any of the claims 1 - 3 which incorporates two springs (18) which can be preloaded to apply a greater or lesser force on the L-shaped part (8) in the unlocking process and in the axial direction of the rotating axis B; and in which these springs are preloaded by means of two set screws (23) which are screwed into openings (19).

5. Head according to any of the claims 1 - 4 in which the principal servomotor B (21) is associated with a reduction gear (22); and in which a pinion (20) which said reduction gear (22) has at the output of its own rotating axis meshes with the gear on the rotating axis B (11) of the lower casing (5).

6. Head according to any of the claims 1 - 5 in which the principal servomotor A (26) meshes with a gear (12), also solidly attached to an external casing (31), and in which both components are fixed to an internal gear (35).

## Patentansprüche

1. Indexierkopf mit zwei Schwenkachsen, mit einer ersten Schwenkachse A senkrecht zu der Befestigungsposition bezüglich des Betriebsmodus des Kopfs in der Messmaschine, und mit einer zweiten Schwenkachse B in der Achse der Befestigungsrichtung, welche wiederum einen oberen Teil des befestigten Kopfs bezüglich der B-Achse und einen unteren Teil des Kopfs, welcher sich bezüglich der Achse A und B bewegt, definiert; und welche Folgendes umfasst:
einen Hauptservomotor A (26) zum Schwenken um die A-Achse und einen Verankerungsmechanismus für die Position an der A-Achse, welcher in dem unteren Teil des Kopfs angeordnet ist; und einen Hauptservomotor B (21) zum Schwenken um die B-Achse mit einem Verankerungsmechanismus für die Position an der B-Achse, welcher an dem oberen Teil des Kopfs angeordnet ist;
**dadurch gekennzeichnet, dass**
der Verriegelungsmechanismus an der B-Achse ein Verankerungsgetriebe (2) umfasst, welches mit einem Übertragungssystem (15) eines Nebenmotors B (14) verbunden ist, der einen L-förmigen Teil (8) als Ergebnis davon, dass das Verankerungsgetriebe (2) an einem Hebel derart gleitet, dass es den unteren Teil des Kopfs anhebt, schwenkt; und
wobei der Verriegelungsmechanismus an der A-Achse einen Verankerungsteil (24) eines äußeren Gehäuses (31) umfasst, welcher eine Anordnung von Kugellagern aufweist, die das Positionieren des äußeren Gehäuses (31) ermöglichen, und wobei ein Nebenservomotor A (33), der mit einem Gewindeschaft (28), der in einem Gewindeloch des Verankerungsteils (24) eingesetzt ist, bereitgestellt ist, wiederum die Vorwärts- oder Rückwärtsbewegung des Verankerungsteils (24) zum Verriegeln des Schwenkens des äußeren Gehäuses (31) in Abhängigkeit der Schwenkrichtung des Nebenservomotors A (33) verursacht.

2. Kopf nach Anspruch 1, wobei der Verankerungsmechanismus für die Achse B eine obere Basis (1) derart umfasst, dass der Teil, welcher das untere Gehäuse (5) trägt, das ein Getriebe für die Schwenkachse B (11) aufnimmt, in der Entriegelungsposition nur von einer Trägerachse (7) getragen wird und an dem Ring (9) ruht, welchen der Teil, der das untere Gehäuse (5) trägt, an seinem oberen Teil aufweist.

3. Kopf nach einem der Ansprüche 1 bis 2, wobei der Hebel des Verankerungsgetriebes (2) zwei flache Bereiche (16), die senkrecht zu der Richtung sind, in welcher die Kraft angewendet wird, und Anschläge (17) am Ende des Hebels aufweist.

4. Kopf nach einem der Ansprüche 1 bis 3, welcher zwei Federn (18) einschließt, die vorgespannt sein können, um eine größere oder geringere Kraft an dem L-förmigen Teil (8) in dem Entriegelungsprozess und in der axialen Richtung der Schwenkachse B anzuwenden; und wobei diese Federn mittels zwei Spannschrauben (23), welche in Öffnungen (19) geschraubt sind, vorgespannt sind.

5. Kopf nach einem der Ansprüche 1 bis 4, wobei der Hauptservomotor B (21) mit einem Untersetzungsgetriebe (22) verbunden ist; und wobei ein Ritzel (20), welches das Untersetzungsgetriebe (22) an dem Abtrieb seiner eigenen Schwenkachse aufweist, mit dem Getriebe an der Schwenkachse B (11) des unteren Gehäuses (5) in Eingriff steht.

6. Kopf nach einem der Ansprüche 1 bis 5, wobei der Hauptservomotor A (26) mit einem Getriebe (12), welches ebenfalls fest an einem äußeren Gehäuse (31) angebracht ist, in Eingriff steht, und wobei beide Komponenten an einem inneren Getriebe (35) befestigt sind.

## Revendications

1. Tête indexée à deux axes de rotation, avec un premier axe de rotation A perpendiculaire à la position de fixation par rapport au mode de fonctionnement de la tête dans l'appareil de mesure, et avec un deuxième axe de rotation B dans l'axe du sens de fixation, définissant à son tour une partie supérieure de la tête fixée par rapport à l'axe B et une partie inférieure de la tête, qui se déplace par rapport à l'axe A et B ; et qui comprend
un servomoteur principal A (26) pour la rotation sur l'axe A et un mécanisme d'ancrage pour la position sur l'axe A disposé sur ladite partie inférieure de la tête ; et un servomoteur principal B (21) pour la rotation sur l'axe B avec un mécanisme d'ancrage pour la position sur l'axe B disposé sur ladite partie supérieure de la tête ;
**caractérisée en ce que**
le mécanisme de verrouillage sur l'axe B comprend un engrenage d'ancrage (2) raccordé à un système de transmission (15) d'un deuxième moteur B (14) qui fait tourner une partie en forme de L (8) grâce à l'engrenage d'ancrage (2) coulissant sur un levier de sorte à relever la partie inférieure de la tête ; et
où le mécanisme de verrouillage sur l'axe A comprend une partie d'ancrage (24) d'une carcasse externe (31) qui a un ensemble de roulements à billes qui permettent de positionner ladite carcasse externe (31), et dans laquelle un deuxième servomoteur A (33) pourvu d'un arbre fileté (28)
inséré dans un orifice fileté de la partie d'ancrage (24) génère à son tour le mouvement avant et arrière de ladite partie d'ancrage (24) pour verrouiller la rotation de ladite carcasse externe (31) en fonction du sens rotatif du deuxième servomoteur A (33).

2. Tête selon la revendication 1 où le mécanisme d'ancrage pour l'axe B comprend une base supérieure (1), de sorte que, dans la position de déblocage, la partie qui supporte la carcasse inférieure (5) loge un engrenage pour l'axe de rotation B (11), supporté exclusivement par un axe de support (7) et reposant sur l'anneau (9) que la partie supportant la carcasse inférieure (5) a sur sa partie supérieure.

3. Tête selon l'une quelconque des revendication 1 - 2 dans laquelle le levier sur l'engrenage d'ancrage (2) a deux zones plates (16), perpendiculaires au sens dans lequel la force est appliquée, et des butées (17) à l'extrémité du levier.

4. Tête selon l'une quelconque des revendications 1 - 3 qui incorpore deux ressorts (18) qui peuvent être préchargés pour appliquer une force plus ou moins importante sur la partie en forme de L (8) dans le processus de déverrouillage et dans le sens axial de l'axe de rotation B ; et dans laquelle ces ressorts sont préchargés au moyen de deux vis de serrage (23) qui sont vissés dans des ouvertures (19).

5. Tête selon l'une quelconque des revendications 1 - 4 dans laquelle le servomoteur principal B (21) est associé à un réducteur à engrenage (22) ; et dans laquelle un pignon (20) que ledit réducteur à engrenage (22) a à la sortie de son propre axe de rotation s'engrène avec l'engrenage sur l'axe de rotation B (11) de la carcasse inférieure (5).

6. Tête selon l'une quelconque des revendications 1 - 5 dans laquelle le servomoteur principal A (26) s'engrène avec un engrenage (12), également relié solidement à une carcasse externe (31), et dans laquelle les deux composants sont fixés à un engrenage interne (35).
